# EUROPÄISCHE PATENTSCHRIFT

(11) **EP 3 819 727 B1**
(45) Veröffentlichungstag und Bekanntmachung des Hinweises auf die Patenterteilung: **24.05.2023**
(21) Anmeldenummer: 19208323.6
(22) Anmeldetag: 11.11.2019
(51) Int. Cl.: G05B 19/042

(54) **LEITSYSTEM FÜR EINE TECHNISCHE ANLAGE MIT TRENDKURVENDIAGRAMM**
CONTROL SYSTEM FOR A TECHNICAL INSTALLATION WITH A TREND CURVE DIAGRAM
SYSTÈME DE CONTRÔLE POUR UNE INSTALLATION TECHNIQUE AYANT UN DIAGRAMME DE COURBE DE TENDANCE

(43) Veröffentlichungstag der Anmeldung: 12.05.2021
(73) Patentinhaber: Siemens Aktiengesellschaft, 80333 München (DE)
(72) Erfinder: Lutz, Benjamin, 76327 Pfinztal (DE)
(74) Vertreter: Siemens Patent Attorneys

(56) Entgegenhaltungen:
- EP-A1- 3 082 082
- US-B1- 6 484 133
- US-B1- 6 885 907

## Beschreibung

Die Erfindung betrifft ein computerimplementiertes Verfahren nach Anspruch 1 und ein Leitsystem nach Anspruch 5.

Bei einer ereignisorientierten Übertragung werden Prozesswerte entweder aufgrund einer hinreichend großen Änderung oder nach Ablauf einer bestimmten Zeitvorgabe (Timeout) von einer Automatisierungsstation in einen Operator Station Server übertragen. Sowohl die Änderungserkennung als auch der Timeout können so konfiguriert werden, dass unter Umständen Prozesswerte nur sehr selten im Prozessabbild des Operator Station Servers aktualisiert werden. Dies hat unmittelbaren Einfluss auf die für die Bedienung und Beobachtung wichtigen verfahrenstechnischen Trendkurven, in denen der Verlauf eines Prozesswertes über der Zeit dargestellt wird. Nur bei regelmäßiger ("zyklischer") Aktualisierung kann ein kontinuierlicher Vorschub der Trendkurve gewährleistet werden.

Die Grundlage einer zuverlässigen Bedienung und Beobachtung durch einen Operatoren hängt daher von dem zeitlichen Abstand zur letzten Aktualisierung der Trendkurven ab, da der Operator zwischen zwei Aktualisierungen mit "Altwerten" arbeiten muss. Bei Fernwirksystemen fallen die Aktualisierungsraten zudem deutlich geringer aus, da nicht jeder geänderte Prozesswert, sondern ganze Pakete von geänderten Prozesswerten übertragen und rückwirkend ins Prozessabbild des Operator Station Servers mit alten Zeitstempeln geschrieben werden.

Bei kurzfristigen Verbindungsausfällen verhält es sich ähnlich: Die aufgestauten, für eine Übertragung vorgesehenen Prozessdaten werden nach Wiederherstellung der ausgefallenen Verbindung als Paket übertragen und rückwirkend ins Prozessabbild geschrieben. Beim Ausfall einer Messstelle stehen bis zur Behebung keinerlei Aktualisierungen zur Ableitung einer Bedienung zur Verfügung - der Operator muss die Anlage währenddessen im "Blindflug" bedienen.

In der US 6 885 907 B1 ist ein Verfahren zum Überwachen transienter Vorgänge eines Prozesses offenbart.

Die US 6 484 133 B1 offenbart ein Verfahren zur Vorhersage eines Sensorsignals.

Der Erfindung liegt die Aufgabe zugrunde, ein computerimplementiertes Verfahren zum Darstellen von Bedieninformationen für eine technische Anlage anzugeben, welches eine Sicherheit der Bedienung der technischen Anlage erhöht.

Die zuvor formulierte Aufgabe wird durch ein computerimplementiertes Verfahren zum Darstellen von Bedieninformationen im Kontext einer technischen Anlage mit den Merkmalen des Anspruchs 1 gelöst. Die technische Anlage weist dabei wenigstens einen Operator Station Server und einen Operator Station Client auf. Das Verfahren weist erfindungsgemäß die folgenden Verfahrensschritte auf:
a) Empfangen von Messwerten wenigstens eines technischen Objektes der technischen Anlage mittels des Operator Station Servers;
b) Kontinuierliche Erzeugung eines tatsächlichen Trendverlaufs des Messwerts, wobei für den Fall, dass kein Messwert von dem wenigstens einen technischen Objekt empfangen werden kann, so lange eine Interpolation des Messwerts zur Erzeugung eines interpolierten Trendverlaufs vorgenommen wird, bis erneut ein Messwert empfangen werden kann;
c) Übertragung des tatsächlichen und des interpolierten Trendverlaufs von dem Operator Station Server zu dem Operator Station Client;
d) Visuelle Darbietung des tatsächlichen und des interpolierten Trendverlaufs an einen Operator der technischen Anlage, vorzugsweise in einem gemeinsamen Trendverlaufsdiagramm;
e) Für den Fall, dass die während eines Zeitraums der Darbietung des interpolierten Trendverlaufs aufgetretenen tatsächlichen Messwerte wenigstens eines technischen Objekts von dem Operator Station Server im Nachhinein empfangen werden können, Verwendung der betreffenden tatsächlichen Messwerte von dem Operator Station Server zur Erzeugung des eigentlichen Trendverlaufs des Messwerts und Übertragen eines Vergleichs des interpolierten und des eigentlichen Trendverlaufs an den Operator Station Client zur visuellen Darbietung an den Operator der technischen Anlage.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Diese Anlagen verfügen jeweils über ein Leitsystem oder zumindest ein computerunterstütztes Modul zur Steuerung und Regelung des ablaufenden Prozesses oder der Produktion. Unter einem Leitsystem wird im vorliegenden Kontext ein computergestütztes technisches System verstanden, das Funktionalitäten zum Darstellen, Bedienen und Leiten eines technischen Systems wie einer Fertigungs- oder Produktionsanlage umfasst. Das Leitsystem umfasst im vorliegenden Fall Sensoren zur Ermittlung von Messwerten sowie verschiedene Aktoren. Zudem umfasst das Leitsystem sogenannte prozessnahe Komponenten, die zur Ansteuerung der Aktoren bzw. Sensoren dienen. Darüber hinaus weist das Leitsystem u.a. Mittel zur Visualisierung der Prozessanlage und zu einem Engineering auf. Unter dem Begriff Leitsystem sind zusätzlich auch weitere Recheneinheiten für komplexere Regelungen und Systeme zur Datenspeicherung und -verarbeitung zu fassen.

Unter einem "Operator Station Server" wird vorliegend ein Server verstanden, der zentral Daten eines Bedien- und Beobachtungssystems sowie in der Regel Alarm- und Messwertarchive eines Leitsystems einer technischen Anlage erfasst und Benutzern (sogenannten Operatoren) zur Verfügung stellt. Der Operator Station Server stellt in der Regel eine Kommunikationsverbindung zu Automatisierungssystemen der technischen Anlage her und gibt Daten der technischen Anlage an den sogenannten Operator Station Client weiter, die zur Bedienung und Beobachtung eines Betriebs der einzelnen Funktionselemente der technischen Anlage dienen. Bei dem Operator Station Server kann es sich, ohne sich darauf zu beschränken, um einen SIMATIC PCS 7 Industrial Workstation Server der Firma SIEMENS handeln.

Der zu dem Operator Station Server gehörige Operator Station Client kann auf die Daten (Archive, Meldungen, Tags, Variablen) des Operator Station Servers zugreifen und Bilder eines Betriebs der technischen Anlage auf einem hierfür geeigneten Anzeigegerät visuell darstellen. Zudem verfügt er über Eingabemittel, die der Bedienung der technischen Anlage durch einen Operator dienen.

Unter einem Operator wird ein menschlicher Bediener der technischen Anlage verstanden. Der Operator interagiert mittels spezieller Benutzerschnittstellen (beispielsweise mittels des Operator Station Clients) mit der technischen Anlage bzw. dessen Leitsystem und steuert spezielle technische Funktionen der technischen Anlage.

Unter einem technischen Objekt wird eine abgeschlossene technische Einheit verstanden, die in eine übergeordnete Steuerungsebene integrierbar ist. Ein solches technisches Objekt kann zum Beispiel ein Zusammenschluss mehrerer Messstellen oder ein größerer Anlagenteil einer industriellen Anlage sein. Das technische Objekt muss aber nicht dem Feld der Industrieanlagen entstammen, sondern kann beispielsweise auch ein Motormodul eines Automobils, eines Schiffs oder dergleichen sein.

Der Operator Station Server empfängt in an sich bekannter Weise Messwerte von wenigstens einem technischen Objekt der technischen Anlage, beispielsweise einem Temperatursensor. Diese Messwerte nutzt er dazu, einen Trendverlauf zu erzeugen und diesen dem Operator mittels des Operator Station Clients zum Zwecke des Bedienens und Beobachtens visuell darzubieten. Es handelt sich dabei, in Abgrenzung zu dem im Folgenden erläuterten interpolierten Trendverlauf, um einen tatsächlichen Trendverlauf, d.h. der Trendverlauf basiert auf real gemessenen Messwerten.

Bleibt eine Aktualisierung des Messwerts aus, d.h. kann der Operator Station Server aus verschiedenen Gründen keine Messwerte empfangen, wird durch den Operator Station Server eine Interpolation des Messwerts durchgeführt. Obgleich keine "echten" Messwerte vorliegen, wird dem Operator ein "abgeschätzter" Verlauf dargestellt, den er als solchen erkennen und auf dessen Grundlage er mögliche Bedienungen ableiten kann. Die Interpolation kann beispielsweise mittels eines bestimmten Triggers (z.B. Messwert wurde über eine bestimmte Zeitdauer hinweg nicht mehr aktualisiert) ausgelöst werden. Ist die Voraussetzung für eine Interpolation nicht mehr gegeben - z.B., weil der Messwert wieder kontinuierlich innerhalb eines Timeouts aktualisiert wird - endet die Interpolation wieder.

Die Darbietung der Trendverläufe kann sich auf von dem Operator im Kontext des Bedienens und Beobachtens aktiv ausgewählte Trendverlaufsdiagramme beschränken. Dies bedeutet, dass für Messwerte, deren dazugehörige technischen Objekte für den Operator momentan keine Bedeutung haben und von diesem daher auch nicht aktiv in dem Operator Station Client zur Bedienung und Beobachtung ausgewählt wurden, keine Trendverläufe ermittelt werden (und schlussfolgernd auch keine interpolierten Ersatzwerte berechnet werden). Dies führt zu einer deutlichen Reduktion der benötigten Ressourcen, da durch die beschriebene Beschränkung der Ermittlung der Trendverläufe nicht für jeden einzelnen Messwert der technischen Anlage (was in der Praxis eine sehr große Zahl bedeuten kann) ständig Berechnungen durchgeführt werden müssen.

Für den Fall, dass die während eines Zeitraums der Darbietung des interpolierten Trendverlaufs aufgetretenen tatsächlichen Messwerte wenigstens eines technischen Objekts von dem Operator Station Server im Nachhinein empfangen werden können, werden die tatsächlichen Messwerte von dem Operator Station Server zur Erzeugung des eigentlichen Trendverlaufs des Messwerts verwendet und ein Vergleich des interpolierten und des eigentlichen Trendverlaufs an den Operator Station Client zur visuellen Darbietung an den Operator der technischen Anlage übertragen wird. Werden demnach von dem Operator Station Server nachträglich Messwerte aus dem Zeitraum, in welchem interpoliert wurde, empfangen, so werden diese auch rückwirkend in den dem Operator dargebotenen Trendverlauf integriert - parallel zu den bereits vorhandenen interpolierten Messwerten. Anhand der Differenz der beiden Verläufe (tatsächlich und interpoliert) kann der Operator erkennen, ober er ggf. eine auf Grundlage von interpolierten Messwerten vorgenommene Bedienungshandlung korrigieren muss, oder ob seine Bedienungshandlung nach wie vor Gültigkeit besitzt.

Bevorzugt wird der interpolierte Trendverlauf zusammen mit dem tatsächlichen Trendverlauf in einem Archiv eines Leitsystems der technischen Anlage hinterlegt. Da ein Operator auf Grundlage eines interpolierten Messwertes eine Bedienungsentscheidung treffen kann, werden diese zur späteren Rückverfolgbarkeit archiviert.

Die zuvor erwähnte Interpolation der Messwerte kann auf Grundlage von historischen Messwerten erfolgen. Hierzu kann ein mathematisches Verfahren wie beispielsweise eine Polynominterpolation verwendet werden.

Alternativ kann die Interpolation der Messwerte auch dahingehend erfolgen, dass Messwerte wenigstens eines zweiten technischen Objekts der technischen Anlage hinzugezogen werden. Dieses Verfahren ist beispielsweise unter dem Begriff "Soft Sensoric" bekannt. Dabei wird beispielsweise ein Druckwert, der nicht direkt gemessen werden kann, mittels mit dem Druckwert in Verbindung stehender Größen wie Temperatur oder Durchfluss interpoliert.

Die zuvor erläuterte Aufgabe wird zudem gelöst durch ein Leitsystem einer technischen Anlage, insbesondere Fertigungsanlage oder Prozessanlage, das dazu ausgebildet ist, ein Verfahren wie zuvor erläutert durchzuführen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, das im Zusammenhang mit den Zeichnungen näher erläutert wird.

Es zeigen:
- FIG 1: ein Trendverlauf mit tatsächlichen Messwerten;
- FIG 2: ein Trendverlauf mit interpolierten Messwerten;
- FIG 3: ein Trendverlauf mit tatsächlichen und interpolierten Messwerten;
- FIG 4: den Trendverlauf gemäß FIG 3 in einem zweiten Aspekt; und
- FIG 5: eine Architektur eines Leitsystems einer technischen Anlage.

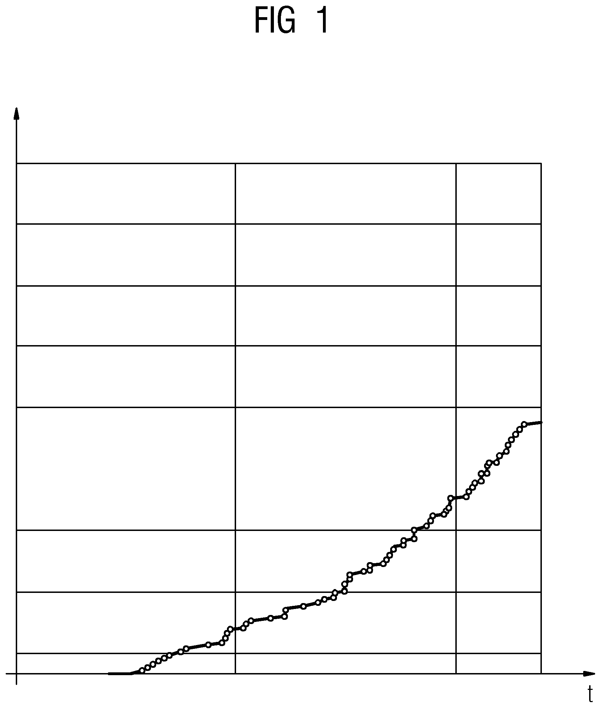

FIG 1 zeigt einen beispielhaften Trendverlauf eines beliebigen Messwerts einer als Prozessanlage ausgebildeten technischen Anlage. Dargestellt ist hierbei ein zeitlicher Verlauf des Messwertes. Die Trendkurve zeigt den aktuellen Verlauf eines Messwertes, d.h. die Zeitachse wird kontinuierlich verschoben.

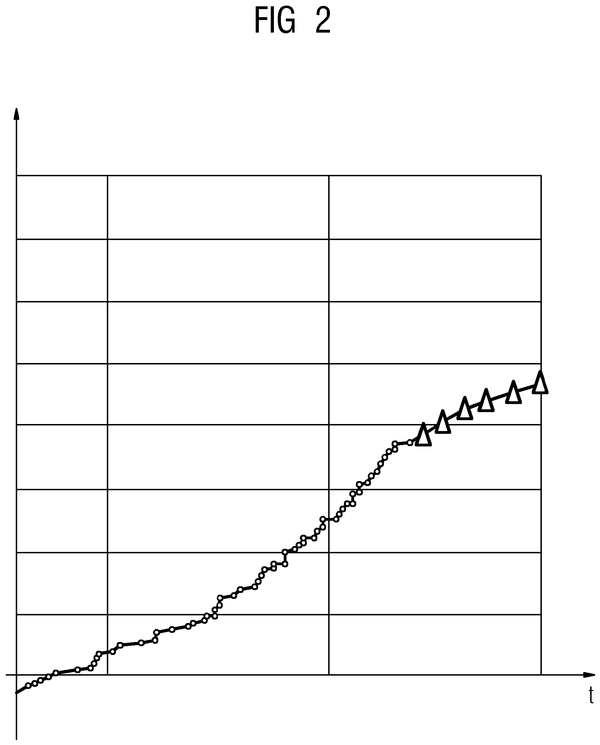

In FIG 2 ist ein rechter Teil der Verlaufskurve durch Dreieckssymbole gekennzeichnet, was bedeutet, dass die Messwerte hier keine tatsächlichen (gemessenen) Werte darstellen, sondern interpolierte (angenäherte und damit nicht real gemessene) Werte. Dem Operator wird eine Information darüber gegeben, dass es sich bei den angezeigten Messwerten um interpolierte Werte handelt. Durch die dynamische Interpolation kann jedoch im Gegensatz zu einem Ausfall der Trendkurve ein kontinuierlicher Vorschub der Trendkurve gewährleistet werden. Die durch die Interpolation berechneten Messpunkte werden in ein Prozessabbild 11 (wie später erläutert) zurückgeschrieben, so dass diese archiviert werden und beim erneuten Öffnen des Trendverlaufs auch wieder dargestellt werden können.

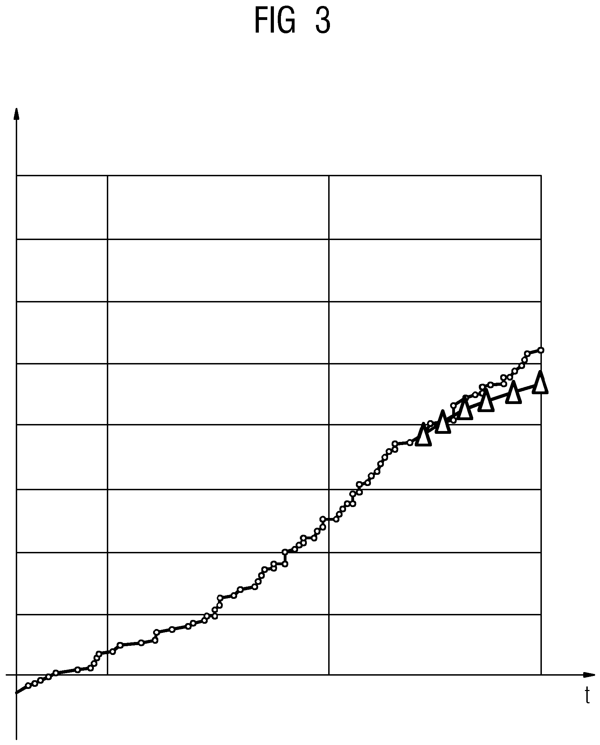

Treffen nun wie einleitend beschrieben Aktualisierungen von Messwerten mit vergangenem Zeitstempel ein, so werden diese auch rückwirkend in den Trendverlauf - parallel zu den bereits vorhandenen interpolierten Messwerten - eingetragen. Diese Gegenüberstellung von interpolierten und tatsächlichen Messwerten ist in FIG 3 zu erkennen, wo der nachträglich eingefügte tatsächliche Trendverlauf der Messwerte sich etwas oberhalb der interpolierten Messwerte befindet. Auch in einer historischen Ansicht einer Trendkurve kann somit nachvollzogen werden, dass für den vorliegenden Messwert wegen Aktualisierungsschwierigkeiten eine Interpolation überbrückend angewendet wurde. Anhand der Differenz der beiden Kurven kann ein Operator erkennen, ober er ggf. eine einer auf Grundlage von interpolierten Messwerten vorgenommenen Bedienungen nachbessern muss, oder ob seine Bedienung nach wie vor Gültigkeit hat.

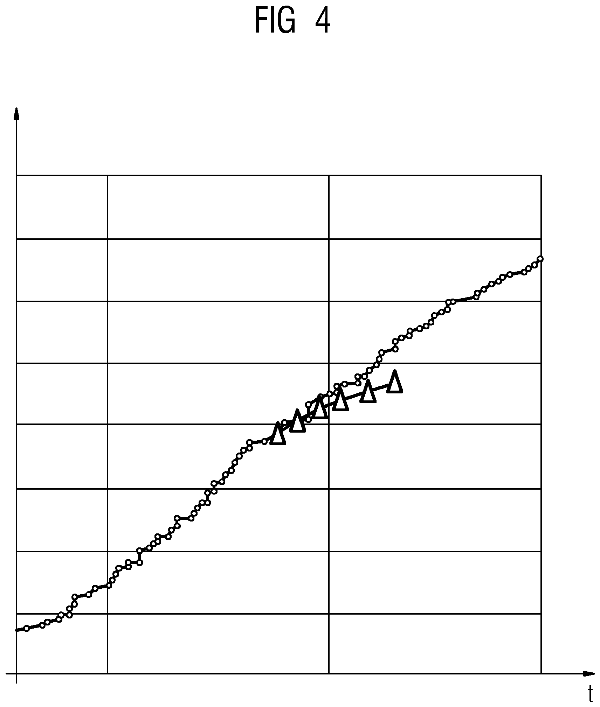

Ist die Voraussetzung für eine Interpolation nicht mehr gegeben - z.B., weil der Messwert wieder kontinuierlich innerhalb eines Timeouts aktualisiert wird - endet die Interpolation unmittelbar, was in FIG 4 dargestellt ist.

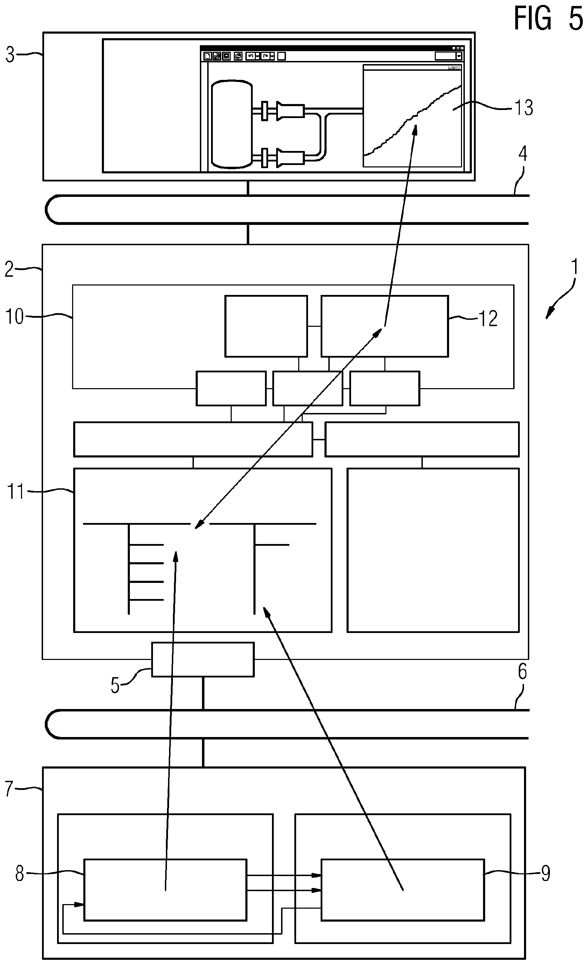

In FIG 5 ist ein Teil eines erfindungsgemäßen Leitsystems 1 einer Prozessanlage dargestellt. Das Leitsystem 1 umfasst einen Server eines Bediensystems bzw. einen Operator Station Server 2 und einen dazugehörigen Operator Station Client 3. Der Operator Station Server 2 und der Operator Station Client 3 sind über einen Terminalbus 4 miteinander und mit nicht dargestellten weiteren Komponenten des Leitsystems 1 wie einem Engineering System Server oder einem Prozessdatenarchiv verbunden.

Ein Benutzer bzw. Operator hat mittels des Operator Station Clients 3 mittels des Terminalbus 4 im Kontext eines Bedienens und Beobachtens Zugriff auf den Operator Station Server 2. Der Terminalbus 4 kann, ohne sich darauf zu beschränken, beispielsweise als Industrial Ethernet ausgebildet sein.

Der Operator Station Server 2 weist eine Geräteschnittstelle 5 auf, die mit einem Anlagenbus 6 verbunden ist. Hierüber kann der Operator System Server 2 mit einem Automatisierungsgerät 7 des Leitsystems 1 kommunizieren. Der Anlagenbus 6 kann, ohne sich darauf zu beschränken, beispielsweise als Industrial Ethernet ausgebildet sein. Das Automatisierungsgerät 7 weist eine Verbindung zu einem ersten technischen Objekt 8 und zu einem zweiten technischen Objekt 9 auf.

In dem Operator Station Server 2 ist ein Visualisierungsdienst 10 integriert, über den eine Übertragung von (Visualisierungs-)Daten an den Operator Station Client 3 erfolgen kann. Zudem weist der Operator Station Server 2 ein Prozessabbild (Process Image) 11 der Prozessanlage auf.

Der Operator Station Server 2 empfängt im normalen Betriebsmodus mittels des Automatisierungsgeräts 7 Messwerte von dem ersten technischen Objekt 8. Die Messwerte werden in dem Prozessabbild 11 des Operator Station Servers 2 hinterlegt. Eine Trendkomponente 12, die ein Teil des Visualisierungsdienstes 10 darstellt, liest die Messwerte aus dem Prozessabbild 11, erzeugt hieraus einen Trendverlauf (mit den tatsächlichen, gemessenen Messwerten) und übermittelt den Trendverlauf an den Operator Station Client 3, welcher den Trendverlauf in Form eines Trendverlaufsdiagramms 13 einem Operator der technischen Anlage darbietet.

Die Trendkomponente 12 implementiert aber auch die zuvor beschriebenen Interpolationsfunktionen, die bei ausbleibenden Aktualisierungen von Messwerten zum Tragen kommen. Dabei können mathematische Methoden auf Basis von historischen Messwerten des ersten technischen Objekts 8 zum Einsatz kommen. Die Interpolation kann aber auch mittels indirekter Messmethoden ("Soft Sensoric") unter Hinzuziehen des zweiten technischen Objekts 9 (wie im allgemeinen Beschreibungsteil erläutert) erfolgen. Die Trendkomponente 12 kann die interpolierten Aktualisierungen sowohl in dem von dem Operator geöffneten Trendkurvendiagramm 13 ausgeben als auch diese über das Prozessabbild 11 des Operator Station Servers 2 in einem nicht dargestellten Archiv des Leitsystems 1 hinterlegen.

Obwohl die Erfindung im Detail durch das bevorzugte Ausführungsbeispiel und die Figuren näher illustriert und beschrieben wurde, so ist die Erfindung im beigefügten Anspruchssatz beschrieben.

## Patentansprüche

1. Computerimplementiertes Verfahren zum Darstellen von Bedieninformationen im Kontext einer technischen Anlage, welche wenigstens einen Operator Station Server (2) und einen Operator Station Client (3) aufweist, das Verfahren umfassend:
a) Empfangen von Messwerten wenigstens eines technischen Objektes (8, 9) der technischen Anlage mittels des Operator Station Servers;
b) Kontinuierliche Erzeugung eines tatsächlichen Trendverlaufs des Messwerts, wobei für den Fall, dass kein Messwert von dem wenigstens einen technischen Objekt (8, 9) empfangen werden kann, so lange eine Interpolation des Messwerts zur Erzeugung eines interpolierten Trendverlaufs vorgenommen wird, bis erneut ein Messwert empfangen werden kann;
c) Übertragung des tatsächlichen und des interpolierten Trendverlaufs von dem Operator Station Server (2) zu dem Operator Station Client (3);
d) Visuelle Darbietung des tatsächlichen und des interpolierten Trendverlaufs an einen Operator der technischen Anlage in einem gemeinsamen Trendverlaufsdiagramm; wobei das Verfahren durch die folgenden Schritte gekennzeichnet ist:
e) Für den Fall, dass die während eines Zeitraums der Darbietung des interpolierten Trendverlaufs aufgetretenen tatsächlichen Messwerte wenigstens eines technischen Objekts (8, 9) von dem Operator Station Server (3) im Nachhinein empfangen werden können, Verwendung der betreffenden tatsächlichen Messwerte von dem Operator Station Server (3) zur Erzeugung des eigentlichen Trendverlaufs des Messwerts und Übertragen eines Vergleichs des interpolierten und des eigentlichen Trendverlaufs an den Operator Station Client (3) zur visuellen Darbietung an den Operator der technischen Anlage.

2. Computerimplementiertes Verfahren nach Anspruch 1, bei dem der interpolierte Trendverlauf zusammen mit dem tatsächlichen Trendverlauf in einem Archiv eines Leitsystems (19) der technischen Anlage hinterlegt wird.

3. Computerimplementiertes Verfahren nach einem der vorangegangenen Ansprüche, bei dem die Interpolation auf Grundlage von historischen Messwerten erfolgt.

4. Verfahren nach einem der Ansprüche 1 oder 2, bei dem die Interpolation unter Einbezug von Messwerten wenigstens eines zweiten technischen Objekts (9) der technischen Anlage erfolgt.

5. Leitsystem (19) einer technischen Anlage, insbesondere Fertigungsanlage oder Prozessanlage, das dazu ausgebildet ist, ein Verfahren gemäß einem der Ansprüche 1 bis 4 durchzuführen.

## Claims

1. Computer-implemented method for representing operator control information in the context of a technical installation, which has at least one operator station server (2) and one operator station client (3), the method comprising:
a) Receiving measurement values of at least one technical object (8,9) of the technical installation by means of the operator station server;
b) Continuously generating an actual trend progression of the measurement value, wherein, in the event that no measurement value can be received from the at least one technical object (8, 9), an interpolation of the measurement value is undertaken to generate an interpolated trend progression, until a measurement value can be received once again;
c) Transferring the actual and the interpolated trend progression from the operator station server (2) to the operator station client (3);
d) Visually presenting the actual and the interpolated trend progression to an operator of the technical installation in a common trend progression diagram; wherein the method is **characterised by** the following steps:
e) In the event that the actual measurement values of at least one technical object (8, 9), which have occurred during a period of time of the presentation of the interpolated trend progression, can be received from the operator station server (3) retrospectively, then using the relevant actual measurement values from the operator station server (3) to generate the actual trend progression of the measurement value and transferring a comparison of the interpolated and the actual trend progression to the operator station client (3) for visual presentation to the operator of the technical installation.

2. Computer-implemented method according to claim 1, in which the interpolated trend progression is stored in an archive of a control system (19) of the technical installation, together with the actual trend progression.

3. Computer-implemented method according to one of the preceding claims, in which the interpolation takes place on the basis of historical measurement values.

4. Method according to one of claims 1 or 2, in which the interpolation takes place taking into account measurement values of at least a second technical object (9) of the technical installation.

5. Control system (19) of a technical installation, in particular manufacturing installation or process installation, which is embodied to carry out a method according to one of claims 1 to 4.

## Revendications

1. Procédé mis en oeuvre par ordinateur de représentation d'informations de service dans le contexte d'une installation technique, qui a au moins un operator station server (2) et un operator station client (3), le procédé comprenant :
a) la réception de valeurs de mesure d'au moins un objet (8, 9) technique de l'installation technique, au moyen de l'operator station server ;
b) la production continue d'une courbe de tendance réelle de la valeur de mesure, dans lequel, dans le cas où une valeur de mesure du au moins un objet (8, 9) technique ne peut pas être reçu, on effectue une interpolation de la valeur de mesure pour la production d'une courbe de tendance interpolée, jusqu'à ce que l'on puisse recevoir à nouveau une valeur de mesure ;
c) la transmission de la courbe de tendance réelle et de la courbe de tendance interpolée de l'operator station server (2) à l'operator station client (3) ;
d) la représentation visuelle de la courbe de tendance réelle et la courbe de tendance interpolée sur un operator de l'installation technique dans un diagramme de courbes de tendance commun, dans lequel le procédé est **caractérisé par** les stades suivants :
e) dans le cas où les valeurs de mesure réelles, apparaissant pendant un laps de temps de la représentation de la courbe de tendance interpolée, d'au moins un objet (8, 9) technique, peuvent être reçues ensuite par l'operator station server (3), l'utilisation par l'operator station server (3) des valeurs de mesure réelles concernées pour la production de la courbe de tendance proprement dite de la valeur de mesure et la transmission d'une comparaison de la courbe de tendance interpolée et de la courbe de tendance proprement dite à l'operator station client (3), pour la représentation visuelle sur l'operator de l'installation technique.

2. Procédé mis en oeuvre par ordinateur suivant la revendication 1, dans lequel on met la courbe de tendance interpolée ensemble avec la courbe de tendance réelle dans une archive d'un système (19) de conduite de l'installation technique.

3. Procédé mis en oeuvre par ordinateur suivant l'une des revendications précédentes, dans lequel l'interpolation s'effectue sur la base de valeurs de mesure historiques.

4. Procédé mis en oeuvre par ordinateur suivant l'une des revendications 1 ou 2, dans lequel l'interpolation s'effectue en incorporant des valeurs de mesure d'au moins un deuxième objet (9) technique de l'installation technique.

5. Système (19) de conduite d'une installation technique, notamment d'une installation de fabrication ou d'une installation de processus, qui est constituée pour effectuer un procédé suivant l'une des revendications 1 à 4.
